# EUROPEAN PATENT SPECIFICATION

(11) **EP 4 569 254 B1**
(45) Date of publication and mention of the grant of the patent: **14.10.2026**
(21) Application number: 23767939.4
(22) Date of filing: 08.08.2023
(51) Int. Cl.: F16L 5/04, H02G 3/04

(54) **FIRE PROTECTIVE SLEEVE**
BRANDSCHUTZMANSCHETTE
MANCHON DE PROTECTION CONTRE LE FEU

(30) Priority: 11.08.2022 GB 202211735
(43) Date of publication of application: 18.06.2025
(73) Proprietor: Intumescent Systems Limited, Barfrestone Dover Kent CT15 7JG (GB)
(72) Inventor: WARD, Derek, Kent CT15 7JG (GB)
(74) Representative: Fry, David John
(86) International application number: PCT/GB2023/052093
(87) International publication number: WO 2024/033631

(56) References cited:
- EP-A2- 2 765 346
- DE-A1- 3 544 129
- DE-U1- 202005 004 339

## Description

### Field of the Invention

This invention relates to a method of and apparatus for automatically closing an opening formed in a ceiling or wall of a building in the event of a fire occurring within that building; more especially, the invention relates to such a method and apparatus for location in openings formed in fire-rated plasterboard ceilings and walls.

### Background of the Invention

Methods and apparatus for automatically closing openings in fire rated ceilings and walls of buildings are known which comprise flexible fire protective sleeves which locate around service cables, pipes and the like passing through such walls and ceilings.

Typically, such sleeves include a coating or layer of intumescent material which expands in the presence of excessive heat thereby reducing the airflow space within the sleeve to minimise or prevent the spread of smoke and fire to adjoining rooms or spaces of a building for an extended period of time to assist evacuation of the building.

Such a fire protective sleeve is disclosed in the Applicant's UK Patent 2533395B.

DE 20 2005 004339 U1 discloses a duct for pipes passing through walls that is made up of two shells of flame-resistant material with an outer film which acts as a hinge. The duct has at least one inner section of intumescent material.

DE 35 44 129 A1 discloses apparatus for the fireproof and smoke-tight sealing of the openings for insulated conduits through walls, ceilings and floors wherein the insulating material surrounding the respective conduit is surrounded by a mechanically firm jacket with the axial length of the jacket being at least substantially the same as or somewhat larger than the thickness of the respective wall, ceiling or floor through which the conduit extends. At least one layer of a sealing material which swells on the action of heat is provided between the jacket and the conduit and is distributed around the periphery, with the radial thickness of the swellable layer amounting to only a fraction of the insulating material.

EP 2 765 346 A1 discloses a pipe insulation structure having an insulating shell which is encapsulated as a secured film made of polyethylene. The insulating shell has a longitudinal slot over the entire length so as to carry out a pipe. An adhesive agent e.g. polyisobutylene is applied on the secured film, for providing a vapor diffusion tightness and weather protection function.

The present invention concerns an improved apparatus for and a method of automatically closing an opening formed in a ceiling or wall of a building in the event of a fire. The apparatus and method have particular application for location in plasterboard ceilings and walls.

### Summary of the Invention

In a first aspect, the invention provides apparatus for location within a through opening of a ceiling or wall of a building, the apparatus including a fire resistant sleeve formed from a pair of semi-circular or substantially semi-circular members coated externally with a sheet of fire-resistant material which extends over the entire outer surfaces of both members and provides a hinge alongside neighbouring elongate side edges of said members, at least one layer of intumescent-containing material adhered to the radially inner surface of each member; characterised in that the members are metallic, the fire resistant material is a cloth and in that a cover sheet of metallic foil is adhered to the exposed surface of said layers of intumescent containing material and all other exposed surfaces of said sleeve other than the sheet of fire-resistant cloth applied to the outer surface of each metallic member.

The sheet of fire-resistant cloth may be adhered to the external surface of each metallic member.

The intumescent material may be graphite based.

Each metallic member may include an external fixing lug to facilitate secure attachment of the apparatus to the wall or ceiling in which it is, in use, located.

In a second aspect, the invention provides a method for automatically closing a generally circular opening formed in a plasterboard ceiling or wall of a building, the method including the steps of locating within said opening a fire resistant sleeve which defines a close fit within the opening and includes an outer housing which comprises a pair of semi-circular or substantially semi-circular metallic members to the external surfaces of each of which is adhered a fire resistant woven glass fibre cloth which extends around the external surface of each metallic member and defines a hinge to enable the metallic members to move between closed and open positions and to the internal surfaces of which are adhered one or more layers of a material which intumesce when subjected to excessive heat, all surfaces other than that covered by the aforesaid woven glass fibre cloth being covered with a sheet or sheets of metallic foil.

In the event of a fire, the sleeve expands inwardly because of the presence of the housing of metallic members. The metallic foil material aids the transfer of heat to the intumescent material to promote expansion of the same.

The intumescent material may be graphite or graphite based.

### Brief Description of the Drawings

The invention will now be described, by way of example only, with reference to the accompanying drawings, in which:-
Figure 1 is a plan view from above of a ceiling mountable fire protective sleeve in accordance with the invention when in its open position;
Figure 2 is a side view of the sleeve illustrated in Figure 1 in its open position; and
Figure 3 is plan view from above of the illustrated sleeve in its closed position.

### Detailed Description of Preferred Embodiments

The apparatus illustrated in the drawings comprises a ceiling or wall mounted fire-resistant metallic sleeve 10 through which services and conduits such as electric cables and water pipes can pass from one room or space of a building to a vertically or horizontally spaced room or space within that building.

The apparatus is particularly suitable for cables and pipes passing through plasterboard ceilings and walls of buildings.

As will be seen from the drawings, the sleeve comprises a pair of metallic semi-circular members 12, 14 to the radially outer surfaces of each of which is adhered a sheet of fire-resistant cloth 16.

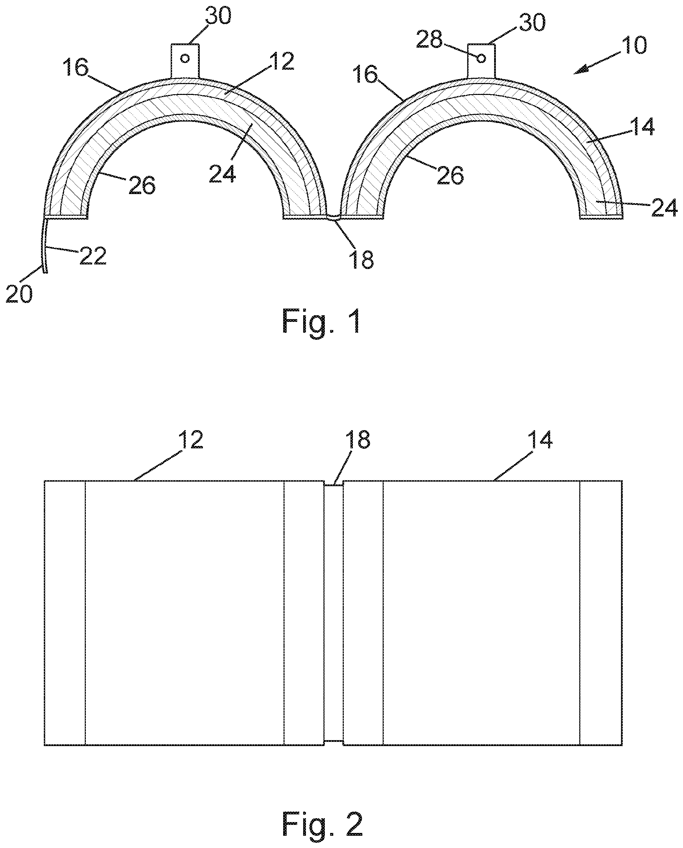

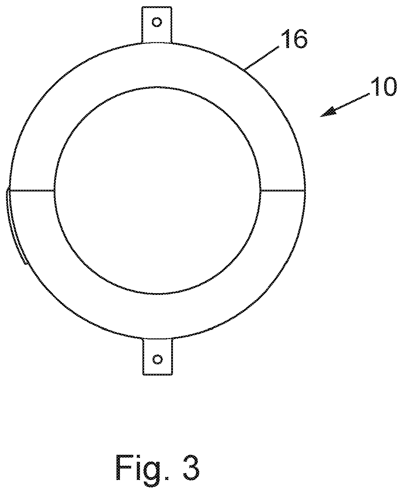

As will be apparent from Figure 1, the fire-resistant cloth 16 covers the entire outer surface of both members 12, 14 and also defines a hinge 18 to enable the metallic sleeve members 12, 14 to move between an open position as shown in Figures 1 and 2 in which the sleeve 10 is enabled to be positioned about the circumference of a conduit, and a closed position as shown in Figure 3 in which the conduit is securely located within the confines of the sleeve.

In a preferred arrangement, the inner surface of the cloth sheet 16 is impregnated with an adhesive to facilitate easy attachment of the cloth sheet 16 to the outer surfaces of the members 12, 14.

The members 12, 14 are preferably produced from mild or stainless steel. However, other materials having similar properties to steel can be employed.

As will be seen from the drawings, a side piece 20 of the cloth sheet 16 extends beyond the respective side of the metallic member 12, the inner surface of this side piece 20 being coated with an adhesive covered by a removable sheet 22.

Once the fire protective sleeve is positioned about the circumference of a conduit, the sheet 22 can readily be removed to enable the side piece 20 to be adhered to the external face of the cloth sheet 16 of the metallic member 14.

Adhered to the radially inner face of each metallic member 12, 14 is a layer of intumescent containing material 24, this layer comprising either a single sheet or multiple sheets of intumescent containing material.

A cover sheet 26 of a metallic foil is then adhered to the exposed face of each layer of intumescent containing material 24 and to all other exposed surfaces of the members 12, 14 excepting that of the sheet of fire-resistant cloth 16.

A fixing lug 30 is attached to and projects outwardly from the upper rim of each semi-circular member 12, 14. In use, these lugs enable the sleeve to be securely attached to the ceiling or wall in which it is to be located.

Typically, the external diameter of the sleeve 10 is between 60mm and 250mm, and its length is preferably either 100mm or 150mm. It has been established that a 100 mm sleeve located in a single skin plasterboard ceiling provides at least 30 minutes protection against the spread of fire, and that a 150mm sleeve provides a minimum of 60 minutes protection against the spread of fire.

In use of the apparatus, the fire protective sleeve in its closed position is simply positioned within a suitably dimensioned through-hole formed in a ceiling or wall of a building and, if appropriate, secured in place by screws passing through the holes 28 of the flanges 30. Where appropriate, prior to installation, the hinged semi-circular members 12, 14 are separated and placed around an existing cable or pipe and then closed and retained in place by the adhesive side piece 20.

When installed in an appropriately dimensioned through-hole in a ceiling or wall of a building, in the event of a fire, the internal layer of intumescent material 24 rapidly expands to seal off the through-hole to prevent the fire and accompanying smoke passing to other areas of the building.

It will be appreciated that the foregoing is merely exemplary of apparatus in accordance with the invention and that modifications can readily be made thereto without departing from the true scope of the invention as set out in the appended claims.

## Claims

1. Apparatus for location within a through opening of a ceiling or wall of a building, the apparatus including a fire resistant sleeve (10) formed from a pair of semi-circular or substantially semi-circular members (12, 14) coated externally with a sheet of fire-resistant material (16) which extends over the entire outer surfaces of both members and provides a hinge (18) alongside neighbouring elongate side edges of said members, at least one layer of intumescent-containing material (24) adhered to the radially inner surface of each member; **characterised in that** the members are metallic, the fire resistant material is a cloth and **in that** a cover sheet of metallic foil is adhered to the exposed surface of said layers of intumescent containing material and all other exposed surfaces of said sleeve other than the sheet of fire-resistant cloth applied to the outer surface of each metallic member.

2. Apparatus as claimed in claim 1 wherein the sheet of fire-resistant cloth is adhered to the external surface of each metallic member.

3. Apparatus as claimed in claim 1 or claim 2 wherein the intumescent material is graphite based.

4. Apparatus as claimed in any one of the preceding claims wherein each metallic member includes an external fixing lug (30) to facilitate secure attachment of the apparatus to the wall or ceiling in which it is, in use, located.

5. Apparatus as claimed in any one of the preceding claims wherein the intumescent material is graphite based.

6. A method for automatically closing a generally circular opening formed in a plasterboard ceiling or wall of a building, the method including the steps of locating within said opening a fire resistant sleeve which defines a close fit within the opening and includes an outer housing which comprises a pair of semi-circular or substantially semi-circular metallic members to the external surfaces of each of which is adhered a fire resistant woven glass fibre cloth which extends around the external surface of each metallic member and defines a hinge to enable the metallic members to move between closed and open positions, and to the internal surfaces of which are adhered one or more layers of a material which intumesce when subjected to excessive heat, all surfaces other than that covered by the aforesaid woven glass fibre cloth being covered with a sheet or sheets of metallic foil.

## Patentansprüche

1. Vorrichtung zur Anordnung innerhalb einer Durchgangsöffnung einer Decke oder Wand eines Gebäudes, wobei die Vorrichtung eine feuerfeste Manschette (10) beinhaltet, die aus einem Paar halbkreisförmiger oder im Wesentlichen halbkreisförmiger Elemente (12, 14) gebildet ist, die extern mit einer Lage aus feuerfestem Material (16) beschichtet sind, die sich über die gesamten Außenflächen beider Elemente erstreckt und ein Scharnier (18) entlang benachbarter länglicher Seitenkanten der Elemente bereitstellt, wobei mindestens eine Schicht aus intumeszierendem Material (24) an der radial inneren Oberfläche jedes Elements anhaftet; **dadurch gekennzeichnet, dass** die Elemente metallisch sind, das feuerfeste Material ein Tuch ist und dadurch, dass eine Decklage aus metallischer Folie an der bloßgelegten Oberfläche der Schichten aus intumeszierendem Material und allen anderen bloßgelegten Oberflächen der Manschette außer der auf die Außenfläche jedes metallischen Elements aufgebrachten Lage aus feuerfestem Tuch anhaftet.

2. Vorrichtung nach Anspruch 1, wobei die Lage aus feuerfestem Tuch an der Außenfläche jedes metallischen Elements anhaftet.

3. Vorrichtung nach Anspruch 1 oder Anspruch 2, wobei das intumeszente Material auf Graphit basiert.

4. Vorrichtung nach einem der vorhergehenden Ansprüche, wobei jedes metallische Element einen externen Befestigungsansatz (30) beinhaltet, um eine sichere Befestigung der Vorrichtung an der Wand oder Decke zu erleichtern, in der sie sich bei Verwendung befindet.

5. Vorrichtung nach einem der vorhergehenden Ansprüche, wobei das intumeszente Material auf Graphit basiert.

6. Verfahren zum automatischen Schließen einer im Allgemeinen kreisförmigen Öffnung, die in einer Gipskartondecke oder -wand eines Gebäudes gebildet ist, wobei das Verfahren die Schritte des Anordnens einer feuerfesten Manschette innerhalb der Öffnung beinhaltet, die eine enge Passung innerhalb der Öffnung definiert und ein Außengehäuse beinhaltet, das ein Paar halbkreisförmiger oder im Wesentlichen halbkreisförmiger metallischer Elemente umfasst, an deren Außenflächen jeweils ein feuerfestes gewebtes Glasfasertuch anhaftet, das sich um die Außenfläche jedes metallischen Elements erstreckt und ein Scharnier definiert, um es den metallischen Elementen zu ermöglichen, sich zwischen geschlossenen und offenen Positionen zu bewegen, und an deren Innenflächen eine oder mehrere Schichten eines Materials anhaften, die intumeszieren, wenn übermäßiger Hitze ausgesetzt, wobei alle Oberflächen außer denen, die von dem vorgenannten gewebten Glasfasertuch abgedeckt sind, mit einer Lage oder Lagen aus metallischer Folie abgedeckt sind.

## Revendications

1. Appareil destiné à être placé à l'intérieur d'une ouverture traversante d'un plafond ou d'un mur d'un bâtiment, l'appareil comprenant un manchon résistant au feu (10) formé d'une paire d'éléments semi-circulaires ou sensiblement semi-circulaires (12, 14) revêtus extérieurement d'une feuille de matériau résistant au feu (16) qui s'étend sur l'ensemble des surfaces extérieures des deux éléments et forme une charnière (18) le long des bords latéraux allongés adjacents desdits éléments, au moins une couche de matériau contenant de l'intumescence (24) étant collée à la surface radialement intérieure de chaque élément ; **caractérisé en ce que** les éléments sont métalliques, le matériau résistant au feu est un tissu et **en ce qu'**une feuille de couverture en feuille métallique mince est collée à la surface exposée desdites couches de matériau contenant de l'intumescence ainsi qu'à toutes les autres surfaces exposées dudit manchon autres que la feuille de tissu résistant au feu appliquée à la surface extérieure de chaque élément métallique.

2. Appareil selon la revendication 1, dans lequel la feuille de tissu résistant au feu est collée à la surface externe de chaque élément métallique.

3. Appareil selon la revendication 1 ou la revendication 2, dans lequel le matériau intumescent est à base de graphite.

4. Appareil selon l'une quelconque des revendications précédentes, dans lequel chaque élément métallique comprend une patte de fixation externe (30) pour faciliter la fixation sûre de l'appareil au mur ou au plafond dans lequel il est placé, en cours d'utilisation.

5. Appareil selon l'une quelconque des revendications précédentes, dans lequel le matériau intumescent est à base de graphite.

6. Procédé permettant la fermeture automatique d'une ouverture globalement circulaire formée dans un plafond ou un mur en placoplâtre d'un bâtiment, le procédé comprenant les étapes de placement à l'intérieur de ladite ouverture d'un manchon résistant au feu qui définit un ajustement serré à l'intérieur de l'ouverture et comprend un boîtier extérieur qui comprend une paire d'éléments métalliques semi-circulaires ou sensiblement semi-circulaires sur les surfaces externes de chacun desquels est collé un tissu de fibre de verre tissé résistant au feu qui s'étend autour de la surface externe de chaque élément métallique et définit une charnière pour permettre aux éléments métalliques de se déplacer entre des positions fermée et ouverte, et sur les surfaces internes desquels sont collées une ou plusieurs couches d'un matériau qui est intumescent lorsqu'il est soumis à une chaleur excessive, toutes les surfaces autres que celles recouvertes par le tissu de fibre de verre tissé susmentionné étant recouvertes d'une feuille ou de feuilles d'une feuille métallique mince.
